# FASCICULE DE BREVET EUROPEEN

(11) **EP 1 177 673 B1**
(45) Date de publication et mention de la délivrance du brevet: **08.12.2004**
(21) Numéro de dépôt: 00931307.3
(22) Date de dépôt: 11.05.2000
(51) Int. Cl.: H04M 19/08

(54) **SYSTEME D'ALIMENTATION A PARTIR D'UNE LIGNE TELEPHONIQUE**
TELEFONLEITUNGSGESPEISTES STROMVERSORGUNGSSYSTEM
TELEPHONE-LINE BASED POWER SUPPLY SYSTEM

(30) Priorité: 12.05.1999 FR 9906242
(43) Date de publication de la demande: 06.02.2002
(73) Titulaire: Ascom Monétel SA, 07500 Guilherand-Granges (FR)
(72) Inventeur: HAMMER, Emeric, F-26500 Bourg-les-Valence (FR)
(74) Mandataire: de Beaumont, Michel
(86) Numéro de dépôt international: PCT/FR2000/001280
(87) Numéro de publication internationale: WO 2000/070862

(56) Documents cités:
- EP-A- 0 687 098
- FR-A- 2 754 414
- US-A- 4 961 220
- US-A- 5 160 851
- US-A- 5 317 545

## Description

La présente invention concerne l'alimentation électrique d'appareils connectés à une ligne téléphonique.

Il existe en permanence une tension aux bornes d'une ligne téléphonique et il est donc tentant pour des utilisateurs de circuits couplés à la ligne téléphonique d'utiliser l'alimentation disponible sur les lignes téléphoniques pour alimenter les appareils qu'ils souhaitent coupler à cette ligne. Toutefois ceci pose problème car les gestionnaires des réseaux téléphoniques imposent que la consommation sur la ligne soit très faible. En France, par exemple, les téléphones publics doivent pouvoir fonctionner avec une puissance maximale de 150 mw.

Ainsi, pour alimenter une charge à partir d'une ligne téléphonique, on a proposé de disposer aux bornes d'un redresseur connecté à la ligne téléphonique, un condensateur de très forte valeur (par exemple de 10 à plusieurs centaines de farads) destiné à accumuler de l'énergie pour une charge. Néanmoins, cette solution amène à utiliser des condensateurs de très grandes dimensions qui sont coûteux et encombrants. De plus, le temps de charge initial d'un tel condensateur à partir d'un état complètement déchargé est très long. Ainsi, de telles alimentations sont peu utilisées.

Il est fait référence au document EP-A-0 687 098 décrivant un système d'alimentation d'une charge à partir d'une ligne téléphonique.

Un objet de la présente invention est de prévoir un système d'alimentation d'une charge à partir d'une ligne téléphonique qui soit particulièrement simple, qui permette un stockage d'une énergie importante et une restitution d'une énergie importante même en période de pointe sans excéder les contraintes de la ligne téléphonique.

La présente invention s'applique plus particulièrement à des appareils tels que des répondeurs, des téléalarmes, des systèmes de télémétrie, des modulateurs/démodulateurs (modem), des terminaux de paiement, des téléphones à paiement par carte ou autre.

Pour atteindre cet objet, la présente invention prévoit un système d'alimentation d'une charge à partir d'une ligne téléphonique comprenant un redresseur connecté aux bornes de la ligne ; un condensateur alimenté par le redresseur, en série avec un premier commutateur ; une batterie rechargeable connectée aux bornes du redresseur en série avec un deuxième commutateur ; une alimentation à découpage, la charge étant connectée à la sortie de l'alimentation à découpage ; et un microcontrôleur dont la borne d'alimentation est connectée au condensateur et peut être connectée à la borne de la batterie par l'intermédiaire d'un troisième camutateur, le microcontrôleur comprenant des moyens pour détecter des états du système et pour commander notamment les premier, deuxième et troisième commutateurs et l'alimentation à découpage.

Selon un mode de réalisation de la présente invention, le condensateur est en série avec un limiteur de courant.

Selon un mode de réalisation de la présente invention, le microcontrôleur est également connecté à un circuit de détection de sonnerie.

Selon un mode de réalisation de la présente invention, le microcontrôleur est en outre connecté à un système de détection d'inversion de polarité.

Selon un mode de réalisation de la présente invention, le microcontrôleur est en outre connecté à un système de détection de coupure de ligne.

Selon un mode de réalisation de la présente invention, le microcontrôleur est associé à un système horodateur.

Selon un mode de réalisation de la présente invention, l'alimentation à découpage comprend en sortie une masse distincte de sa masse en entrée.

Selon un mode de réalisation de la présente invention, le microcontrôleur commande l'action du limiteur en série avec le condensateur.

Selon un mode de réalisation de la présente invention, le microcontrôleur commande la charge de la batterie seulement une fois que le condensateur est complètement chargé.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente de façon très schématique un système d'alimentation selon la présente invention ; et
la figure 2 représente de façon un peu plus détaillée mais encore très schématique un système d'alimentation selon la présente invention.

Dans les figures, les lignes en traits pleins représentent des trajets de courants d'alimentation et les lignes en traits pointillés représentent des trajets de signaux de commande.

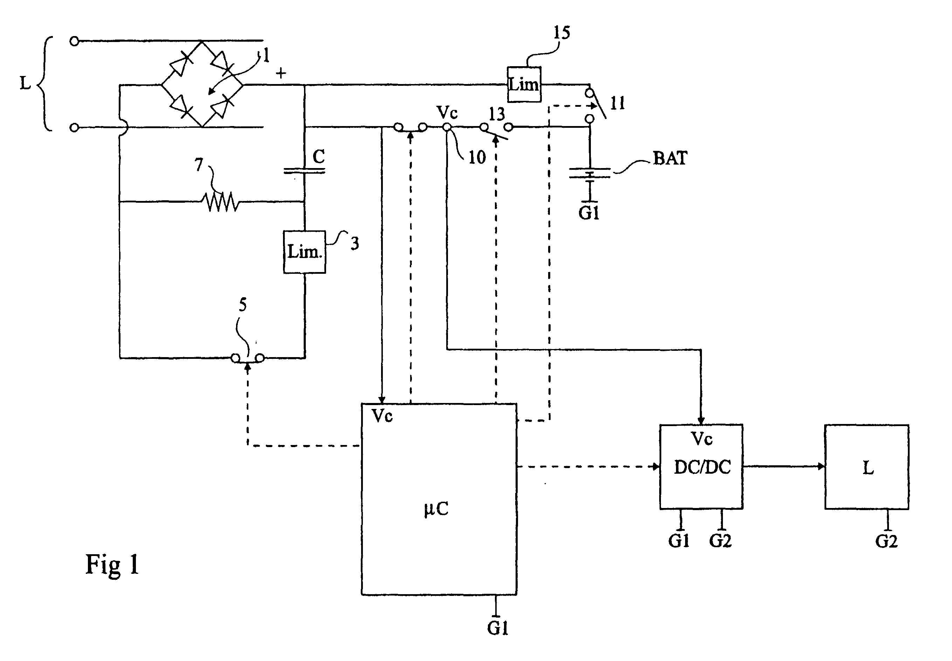

Comme l'illustre la figure 1, la présente invention s'applique à une ligne téléphonique L. Un redresseur est connecté aux bornes de cette ligne téléphonique, par exemple un pont de diodes 1. La borne positive du pont est connectée à un condensateur C en série avec un commutateur électronique 5 dont la deuxième borne est reliée à la borne négative du pont, et éventuellement avec un dispositif de limitation de courant 3. Le condensateur C a une capacité moyenne, inférieure à 0,1 F, par exemple comprise entre 10 000 et 100 000 µF. Une résistance de fuite de forte valeur 7 est connectée entre la deuxième borne du condensateur C et la borne négative du pont. La borne de commande du commutateur 5 est commandée par un microcontrôleur µC.

La borne positive du condensateur C est connectée à la borne d'alimentation du microcontrôleur µC. Cette borne positive est reliée par l'intermédiaire d'un commutateur 9 à une borne d'alimentation 10 du système à une tension Vc. Le commutateur 9 est commandé par une sortie du microcontrôleur.

Les commutateurs 5 et 9 sont normalement fermés. Ainsi, dès que le système est connecté à la ligne téléphonique, le condensateur C se charge par l'intermédiaire du limiteur de courant 3, ou par l'intermédiaire de la résistance de fuite 7 si le limiteur de courant ne fonctionne pas en l'absence de commande du microcontrôleur. Dès que la tension aux bornes du condensateur devient suffisante, le microcontrôleur est alimenté et commande d'une part le limiteur d'autre part le commutateur 5 pour que le condensateur se charge à une tension déterminée. Par exemple, le microcontrôleur se met à fonctionner dès que la tension VC dépasse 1,8 volts et ensuite ce microcontrôleur gère l'interrupteur 5 et/ou le limiteur 3 pour que la tension aux bornes du condensateur C soit légèrement inférieure à 7 volts.

La borne 10 est également connectée à un convertisseur continu-continu, par exemple une alimentation à découpage DC/DC. L'alimentation à découpage est commandée par le microcontrôleur et alimente une charge L. Selon un avantage de l'utilisation d'une telle alimentation à découpage, celle-ci peut comporter un primaire à la masse G1 du système d'alimentation et du microcontrôleur et un secondaire à la masse G2 de la charge.

Dans ce qui précède, on a décrit un système dans lequel l'alimentation est assurée par la charge stockée aux bornes d'un condensateur C et régulée par un microcontrôleur µC agissant sur des commutateurs 5 et 9.

Selon l'invention, il est en outre prévu d'associer au système une batterie rechargeable BAT connectée entre la borne d'alimentation positive du pont 1 et la masse G1, en série avec un commutateur électronique normalement ouvert 11. La borne positive de la batterie est en outre connectée à la borne 10 par l'intermédiaire d'un autre commutateur normalement ouvert 13.

Comme on l'a vu précédemment, le système est initialisé par la charge du condensateur C qui demeure ensuite la source principale d'alimentation du système. Le microcontrôleur dispose notamment de moyens pour surveiller la charge du condensateur. Quand celui-ci est complètement chargé, le commutateur 11 est fermé de sorte que la batterie rechargeable se charge par l'intermédiaire d'un limiteur de courant 15. Cette charge peut être soumise à d'autres conditions, par exemple se produire pendant des heures de faible utilisation de la ligne téléphonique. Ensuite, lors du fonctionnement du système, le microcontrôleur gérera la fermeture du commutateur 13 et éventuellement l'ouverture du commutateur 9 quand la charge aura besoin d'une pointe d'énergie.

Le système selon la présente invention présente de nombreux avantages par rapport à l'utilisation d'un condensateur de stockage seul ou d'une batterie seule.

Par rapport à un système comprenant seulement une batterie, le fait d'utiliser un condensateur de capacité moyenne permet un démarrage rapide du système. D'autre part, le fait que le microcontrôleur soit initialement alimenté par le condensateur permet que la recharge de la batterie puisse se faire sous la commande du microcontrôleur qui va agir sur le commutateur 11 pour obtenir une charge idéale qui est une garantie de longue durée de vie pour une batterie rechargeable.

Un autre avantage du système mixte est que le système continue à fonctionner si la batterie est morte ou comme on l'a vu précédemment si la batterie n'est initialement pas chargée.

Un autre avantage est que, en cas de défaillance de la ligne téléphonique, ceci peut être détecté par le microcontrôleur qui isole immédiatement le condensateur et met l'ensemble du système en veille sous la seule alimentation de la batterie et/ou du condensateur. Notamment, on peut alors conserver des données éventuellement critiques mémorisées dans le microcontrôleur.

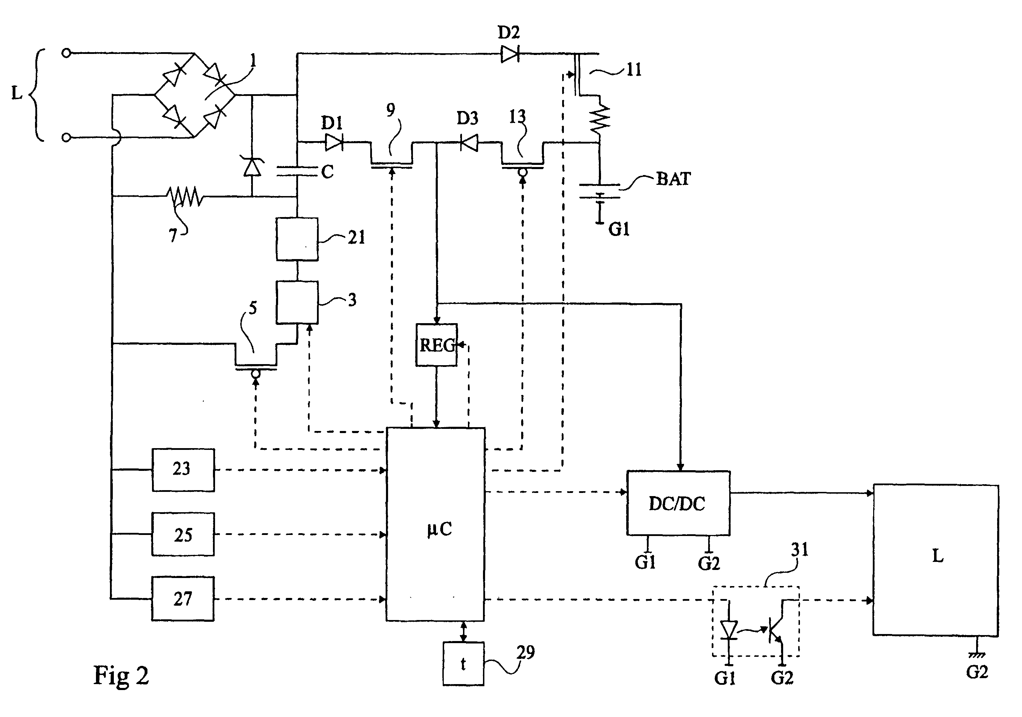

La figure 2 représente le schéma de la figure 1 sous forme un peu plus détaillée. On retrouve en figure 2 :
- le pont redresseur 1,
- le condensateur C,
- le limiteur 3 commandé par le microprocesseur,
- le commutateur 5 constitué d'un transistor MOS à canal N,
- la résistance de fuite 7,
- le commutateur 9 constitué d'un transistor MOS à canal P, en série avec une diode D1,
- le microcontrôleur µC,
- le commutateur 11 constitué d'un transistor MOS à canal N, en série avec une diode D2,
- la batterie rechargeable BAT,
- le commutateur 13 constitué d'un transistor MOS à canal P, en série avec une diode D3,
- un convertisseur DC-DC, tel qu'une alimentation à découpage,
- une charge ou système à alimenter L.

En outre, on a représenté en série avec le condensateur C et le limiteur 3 une inductance électronique 21 destinée à bloquer le courant alternatif et à réduire les ondulations de tension ainsi que divers blocs de détection, par exemple un bloc de détection de tension de sonnerie 23, un bloc de détection d'inversion de polarité au montage 25, un bloc de détection de coupure de ligne 27, un bloc destiné à avoir une fonction d'horodateur 29. Le bloc horodateur fera en pratique de préférence partie intégrante du microcontrôleur. L'heure pourra être rechargée par une commande manuelle ou par des signaux envoyés sur la ligne téléphonique. En outre, le couplage entre le microcontrôleur et la charge peut se faire par l'intermédiaire d'un optocoupleur 31 pour permettre une commande logique d'éléments de la charge tout en respectant les consignes d'isolement. Le système pourra également comprendre un détecteur de signal de sonnerie, des moyens de récupération de l'énergie de sonnerie, et des moyens de fourniture d'une sonnerie modulable.

Bien entendu, et bien que cela ne soit pas représenté, on prévoira des moyens de mesure de la tension aux bornes du condensateur et des moyens de mesure de la tension aux bornes de la batterie. Ces mesures peuvent par exemple être effectuées périodiquement.

Ainsi, le système selon la présente invention est un système particulièrement souple permettant d'optimiser les dimensions d'un condensateur de stockage et d'une batterie rechargeable, tout en assurant une gestion de l'ensemble du système par un microcontrôleur qui est initialement alimenté sous l'effet du condensateur et qui peut ensuite être maintenu à l'état chargé sous l'effet de la batterie rechargeable. Le microcontrôleur permet notanment d'optimiser les conditions de charge du condensateur et de la batterie.

La présente invention est susceptible de diverses variantes et modifications qui apparaîtront à l'homme de l'art. Par exemple, la plupart des avantages de l'invention seront conservés si la batterie est remplacée par un élément de stockage rechargeable tel qu'un condensateur de très forte capacité (supérieure à 10 F).

## Revendications

1. Système d'alimentation d'une charge à partir d'une ligne téléphonique (L) comprenant :
un redresseur (1) connecté aux bornes de la ligne ;
un condensateur (C) alimenté par le redresseur (1), en série avec un premier commutateur (5) ;
un élément de stockage rechargeable tel qu'une batterie (BAT) connectée aux bornes du redresseur (1) en série avec un deuxième commutateur (11) ;
une alimentation à découpage (DC-DC), la charge étant connectée à la sortie de l'alimentation à découpage ; et
un microcontrôleur dont la borne d'alimentation est connectée au condensateur et peut être connectée à la borne de la batterie par l'intermédiaire d'un troisième commutateur (13), le microcontrôleur comprenant des moyens pour détecter des états du système et pour commander notamment les premier, deuxième et troisième commutateurs et l'alimentation à découpage.

2. Système selon la revendication 1, **caractérisé en ce que** le condensateur (C) est en série avec un limiteur de courant (3).

3. Système selon la revendication 1, **caractérisé en ce que** le microcontrôleur est également connecté à un circuit de détection de sonnerie.

4. Système selon la revendication 1, **caractérisé en ce que** le microcontrôleur est en outre connecté à un système de détection d'inversion de polarité.

5. Système selon la revendication 1, **caractérisé en ce que** le microcontrôleur est en outre connecté à un système de détection de coupure de ligne.

6. Système selon la revendication 1, **caractérisé en ce que** le microcontrôleur est associé à un système horodateur.

7. Système selon la revendication 1, **caractérisé en ce que** l'alimentation à découpage comprend en sortie une masse (G2) distincte de sa masse en entrée (G1).

8. Système selon la revendication 1, **caractérisé en ce que** le microcontrôleur commande l'action du limiteur (3) en série avec le condensateur (C).

9. Système selon la revendication 1, **caractérisé en ce que** le microcontrôleur commande la charge de la batterie (BAT) seulement une fois que le condensateur (C) est complètement chargé.

## Patentansprüche

1. System zum Versorgen bzw. Speisen einer Last über eine Telephonleitung (L) mit:
einem Gleichrichter (1), welcher über Anschlüsse bzw. Klemmen der Leitung hinweg verbunden ist;
einem Kondensator (C), welcher von dem Gleichrichter (1) gespeist wird und in Reihe mit einem ersten Schalter (5) verbunden ist;
einem wiederaufladbaren Speicherelement, wie beispielsweise einer Batterie (BAT), das bzw. die mit Anschlüssen des Gleichrichters (1) und in Reihe mit einem zweiten Schalter (11) verbunden ist;
einer geschalteten Leistungsversorgung (DC-DC), wobei die Last mit dem Ausgang der geschalteten Leistungsversorgung verbunden ist; und
einem Mikrocontroller, dessen Versorgungsanschluss mit dem Kondensator verbunden ist und über einen dritten Schalter (13) mit dem Anschluss der Batterie verbindbar ist, wobei der Mikrocontroller Mittel zum Detektieren von Systemzuständen und zum Steuern insbesondere der ersten, zweiten und dritten Schalter und der geschalteten Leistungsversorgung umfasst.

2. System gemäß Anspruch 1, **dadurch gekennzeichnet, dass** der Kondensator (C) in Reihe mit einem Strombegrenzer (3) geschaltet ist.

3. System gemäß Anspruch 1, **dadurch gekennzeichnet, dass** der Mikrocontroller auch mit einer Klingel- bzw. Anrufdetektierschaltung verbunden ist.

4. System gemäß Anspruch 1, **dadurch gekennzeichnet, dass** der Mikrocontroller ferner mit einem System zum Detektieren einer Polaritätsumkehrung verbunden ist.

5. System gemäß Anspruch 1, **dadurch gekennzeichnet, dass** der Mikrocontroller ferner mit einem Leitungsunterbrechungsdetektor verbunden ist.

6. System gemäß Anspruch 1, **dadurch gekennzeichnet, dass** der Mikrocontroller mit einem Zeiterfassungssystem assoziiert ist.

7. System gemäß Anspruch 1, **dadurch gekennzeichnet, dass** die geschaltete Leistungsversorgung an ihrem Ausgang eine Erde bzw. Masse (G2) unterschiedlich von der Erde bzw. Masse am Eingang (G1) aufweist.

8. System gemäß Anspruch 1, **dadurch gekennzeichnet, dass** der Mikrocontroller die Wirkung des Begrenzers (3) in Reihe mit dem Kondensator (C) steuert.

9. System gemäß Anspruch 1, **dadurch gekennzeichnet, dass** der Mikrocontroller das Laden der Batterie (BAT) erst dann befiehlt, wenn der Kondensator (C) vollständig geladen ist.

## Claims

1. A system for supplying a load from a telephone line (L) including:
a rectifier (1) connected across the line;
a capacitor (C) supplied by the rectifier (1), in series with a first switch (5);
a rechargeable storage element such as a battery (BAT) connected across the rectifier (1) in series with a second switch (11);
a switched-mode power supply (DC-DC), the load being connected to the output of the switched-mode power supply; and
a microcontroller, the supply terminal of which is connected to the capacitor and can be connected to the battery terminal via a third switch (13), the microcontroller including means for detecting system states and for especially controlling the first, second, and third switches and the switched-mode power supply.

2. The system of claim 1, **characterized in that** the capacitor (C) is in series with a current limiter (3).

3. The system of claim 1, **characterized in that** the microcontroller is also connected to a ringing detection circuit.

4. The system of claim 1, **characterized in that** the microcontroller is further connected to a system of polarity inversion detection.

5. The system of claim 1, **characterized in that** the microcontroller is further connected to a line cut-off detector.

6. The system of claim 1, **characterized in that** the microcontroller is associated with a time stamp system.

7. The system of claim 1, **characterized in that** the switched-mode power supply includes at its output a ground (G2) distinct from its input ground (G1).

8. The system of claim 1, **characterized in that** the microcontroller controls the action of the limiter (3) in series with the capacitor (C).

9. The system of claim 1, **characterized in that** the microcontroller controls the charge of the battery (BAT) only once the capacitor (C) is fully charged.
